# EUROPEAN PATENT APPLICATION

(11) **EP 3 677 406 A1**
(43) Date of publication of application: **08.07.2020**
(21) Application number: 19150588.2
(22) Date of filing: 07.01.2019
(51) Int. Cl.: B29C 63/02

(54) **OVERLAY APPLICATOR, OVERLAY AND METHOD OF APPLYING AN OVERLAY**

(71) Applicant: KMP AG, 84307 Eggenfelden (DE)
(72) Inventor: Lancaster, Paul, Limerick, V94DW67 (IE); Liu, Bingyan, 84524 Neuötting (DE)
(74) Representative: Rothkopf, Ferdinand

(57) **Abstract**

The invention refers to an overlay applicator for applying an overlay onto a screen of an electronic device, the overlay applicator apparatus including a first and a second applicator member. The first applicator member including a device positioning means for stationary positioning the electronic device relative to the first applicator member, and the first applicator member including an overlay positioning means for stationary positioning the overlay relative to the electronic device. The second applicator member including a member positioning means for stationary positioning the second applicator member relative to the first applicator member, and the second applicator member including a transfer means for taking over the overlay from the electronic device and for positioning the overlay back onto the electronic device while positioning the second applicator member onto the first applicator member, removing the second applicator member from the first applicator member and positioning the second applicator member back onto the first applicator member.

## Description

### TECHNICAL FIELD

This disclosure relates generally to an overlay applicator, and relates more particularly to an overlay and a method of applying such an overlay on a screen of an electronic device by means of such an overlay applicator.

### BACKGROUND

Electronic devices, such as smart-phones, tablet or laptop computing devices, etc., have gained widespread popularity. These devices generally have screens, and many of these devices have touchscreens. To protect these screens, many manufacturers now produce clear film overlays, which can be applied to the screens to keep the screens clear and protect against damage, such as accidental scratching. Many of these films include an adhesive to adhere to the screens of the electronic devices.

### PROBLEM UNDERLYING THE INVENTION

Oftentimes, application of an overlay to the screen of a device results in misalignment of the overlay on the device. Further, air bubbles and/or dirt such as dust, fingerprints or other particulates might be included between the overlay and the screen of the device. It is an object of the present invention to provide an overlay applicator, an overlay and a method of applying an overlay on an electronic device which overcomes these problems known from prior art.

### SOLUTION ACCORDING TO THE INVENTION

According to a first aspect of the invention an overlay applicator for applying an overlay onto a screen of an electronic device is provided. The overlay applicator apparatus includes a first and a second applicator member. The first applicator member includes a device positioning means for stationary positioning the electronic device relative to the first applicator member. The first applicator member further includes an overlay positioning means for stationary positioning the overlay relative to the electronic device. The second applicator member includes a member positioning means for stationary positioning the second applicator member relative to the first applicator member. The second applicator member further includes a transfer means for taking over the overlay from the electronic device and for positioning the overlay back onto the electronic device. The user of such an overlay applicator may position the second applicator member onto the first applicator member and removing the second applicator member from the first applicator member. During such positioning and removal the second applicator member will have taken over the overlay from the first applicator member. The user may then remove an adhesive release layer from the overlay, thus exposing an adhesive layer of the overlay. Thereafter, the user may position the second applicator member back onto the first applicator member, thus placing and adhering the overlay onto the electronic device. Such overlay applicator according to the invention tremendously improves and simplifies the process of applying an overlay onto an electronic device, in particular of applying a transparent or translucent screen protector onto a surface of a smart-phone. The overlay applicator may be used for applying a screen protector to a screen of an electronic device, but also for applying e.g. a back overlay, such as a glass protector for the back glass of a smart-phone. The overlay applicator according to the invention saves time when applying the overlay and can be universally used for most of the smart-phones.

According to a preferred improvement of the invention the transfer means includes a suction mechanism, in particular in the form of at least one suction cup. The at least one suction cup automatically takes over the overlay onto the second applicator member.

According to a further preferred improvement of the invention the transfer means is removably attached onto the second applicator member, in particular by means of a magnetic connector. The removably attached transfer means can be released easily from the second applicator member after having positioned the second applicator member back onto the first applicator member. Thus, the overlay will easily rest or stay adhered on the electronic device.

According to further improvements of the overlay applicator according to the invention the second applicator member is pivotally attached to the first applicator means, in particular by means of a hinge. A pivoting or swivel movement of the second applicator member makes the removing of the second applicator member from the first applicator member and the positioning of the second applicator member back onto the first applicator member user-friendly and easy to use.

According to a further preferred improvement of the invention the member positioning means includes an alignment mechanism, in particular in the form of at least one alignment rail. The alignment mechanism makes the positioning of the overlay back onto the electronic device even more precisely.

Further preferred, the device positioning means includes a clamp mechanism, in particular in the form of at least one clamp slider. The clamp mechanism grabs and aligns the electronic device relative to the first applicator member.

According to a further preferred improvement of the invention the clamp mechanism includes two clamp sliders and two stationary bearings, each of the bearings being located opposite of one of the clamp sliders. Alternatively, four clamp sliders may be provided, two being located opposite of each other, respectively. Each clamp slider and/or bearing is preferably located at the middle of the sides of a rectangular electronic device.

According to a second aspect of the invention an overlay is provided. The overlay is to be applied onto a screen of an electronic device by means of an overlay applicator. The overlay includes an overlay layer having a bottom side and an outer rim. An adhesive layer is attached to the bottom side of the overlay layer and an adhesive release layer is removably attached onto the adhesive layer. The adhesive release layer includes at least one positioning protrusion protruding over the outer edge or rim of the overlay layer. The at least one positioning protrusion is adapted to be positioned relative to a screen of an electronic device by means of an overlay positioning means in the overlay applicator. The adhesive layer is configured to adhere the overlay layer onto the screen. The adhesive release layer is provided for protecting the adhesive agent during transport and provision of the overlay, and for exposing the adhesive agent when applying the adhesive layer onto the screen of the electronic device. The at least one positioning protrusion, which can also be called a positioning overhang, protrudes over or out from the rim of the overlay layer. Thereby, the positioning protrusion can be contacted by an overlay positioning means of the overlay applicator according to the invention.

According to a preferred improvement of the overlay the adhesive release layer including two positioning protrusions defining there between a positioning cavity. The overlay positioning means may grab into such positioning cavity. The at least one positioning protrusion is preferably provided at the long side, and further preferred not at the short side, of a rectangular electronic device.

According to a third aspect of the invention a method of applying an overlay layer onto a screen of an electronic device is provided, the method including the steps of: stationary positioning the electronic device relative to a first applicator member of an overlay applicator, stationary positioning the overlay relative to the electronic device, stationary positioning a second applicator member of the overlay applicator relative to the first applicator member, taking over the overlay from the electronic device onto the second applicator member, removing the second applicator member from the first applicator member, removing an adhesive release layer from the overlay, and positioning the second applicator member back onto the first applicator member, thereby positioning and adhering the overlay onto the electronic device.

### BRIEF DESCRIPTION OF THE DRAWINGS

To facilitate further description of the embodiments, the following drawings are provided in which:
FIG. 1 illustrates a perspective view of a first embodiment of an overlay applicator according to the invention in a first open state,
FIG. 2 illustrates the overlay applicator of FIG. 1 in a second open state,
FIG. 3 illustrates the overlay applicator of FIG. 1 in a closed state,
FIG. 4 illustrates the overlay applicator of FIG. 1 in a third open state,
FIG. 5 illustrates the overlay applicator of FIG. 1 in a forth open state,
FIG. 6 illustrates four views of a first embodiment of an overlay according to the invention to be applied by the overlay applicator of FIG. 1 to 5,
FIG. 7 illustrates four views of a second embodiment of an overlay according to the invention,
FIG. 8 illustrates a perspective view of a second embodiment of an overlay applicator according to the invention in an open state, and
FIG. 9 illustrates a top view of the overlay applicator of FIG. 8.

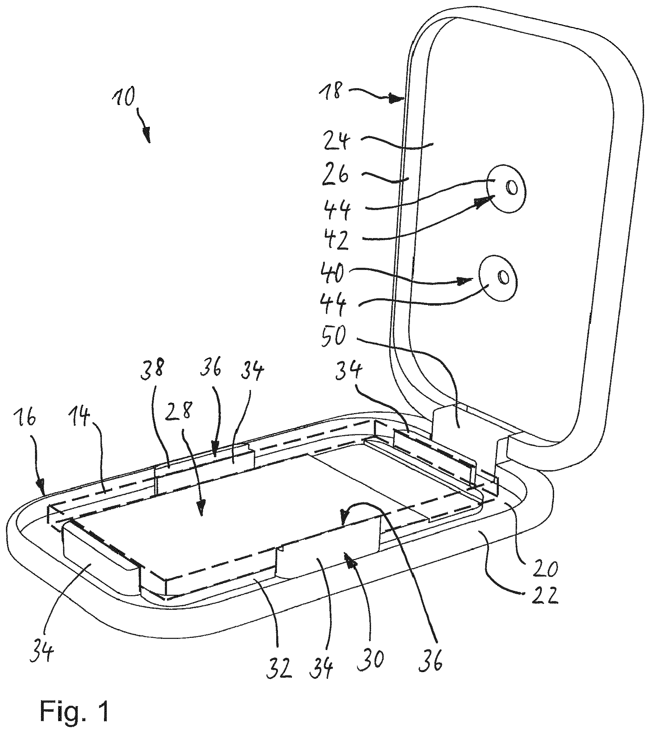

Turning to the drawings, FIG. 1 to 5 perspective views show various elements of an overlay applicator 10 for applying an overlay 12 onto a top side or screen of an electronic device 14. Overlay applicator 10 includes a first applicator member 16 and a second applicator member 18. First applicator member 16 is primarily a rectangular base plate 20 having a circumferential base wall 22 extending therefrom to a top side, the top side facing the second applicator member 18. Second applicator member 18 is primarily a rectangular lid plate 24, which has the size of the base plate 20 and includes a lid wall 26 extending therefrom circumferentially to a bottom side, the bottom side facing the first applicator member 16.

On the top side of the base plate 20 of the first applicator member 16 there is provided a device positioning means 28. The device positioning means 28 is provided for stationary position the electronic device 14 within the first applicator member 16. Therefor, the device positioning means 28 includes a clamp mechanism 30 which is made by a rectangular plate-shaped mechanism base 32 surrounded by four stationary bearings 34. The mechanism base 32 might include any sort of recesses for inserting any kind of protruding parts of the respective electronic device 14. Each stationary bearing 34 has the form of a short bar or beam, which preferably has the length of between one half and one third of the entire length of one of the sides of the rectangular mechanism base 32 and which is preferably located in the middle of the respective side of the rectangular mechanism base 32.

The first applicator member 16 further includes an overlay positioning means 36 for stationary positioning the overlay 12 on the respective electronic device 14 within the base wall 22 of the first applicator means 16. The overlay positioning means 36 is formed by a respective groove or recess 38 on the top side of those stationary bearings 34 which are located on the longer sides of the four sides of the rectangular mechanism base 32. The recesses 38 facing the interior room or space which is located over the mechanism base 32 and which is embraced by the four stationary bearings 34.

Any such clamp mechanism 30 might be formed integrally with the base plate 20 of the first applicator member 16 or might be formed non-integrally, detachable and exchangeable from the base plate 20 of the first applicator member 16. Thus, different sizes of device positioning means 28 might be provided in one and the same overlay applicator 10 for different sort of electronic devices 14.

The second applicator member 18 includes a transfer means 40 facing the first applicator member 16, the device positioning means 28 and also the overlay positioning means 36 of the first applicator member 16. The transfer means 40 is made by a suction mechanism 42 which includes two suction cups 44 being detachably located at the bottom side of the lid plate 24 by means of respective magnets 46. Each of the two magnets 46 is to be placed in a respective opening 48 including a clearance fit in the lid plate 24 of the second applicator member 18.

The second applicator member 18 is pivotally attached to the first applicator member 16 by means of a hinge 50 which is located at one of the shorter sides of the base plate 20 and the lid plate 26, respectively. The first and second applicator members 16 and 18 further include an alignment mechanism 52 in the form of two alignment rails 54 being located at the longer sides of the base wall 22 and the lid wall 26, respectively.

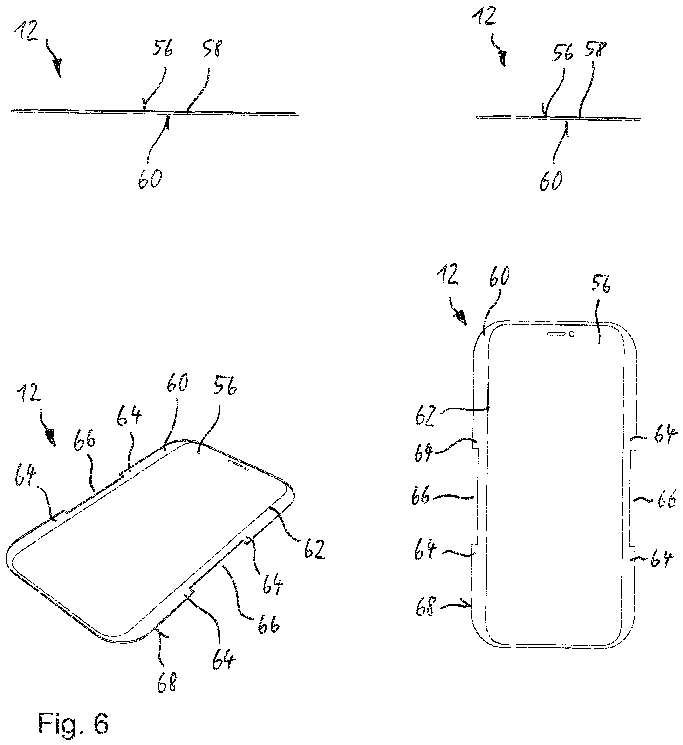

Referring to the views of FIG. 6, the overlay 12 is formed by a plate-shaped rectangular overlay layer 56 on which firstly an adhesive layer 58 and secondly an adhesive release layer 60 are applied or spread on one of its plate side faces. The overlay layer 56 and the adhesive layer 58 provided thereon include an outer edge 62 over which two positioning protrusions 64 protrude on each of the longer sides of the rectangular shape of the outer edge 62 of the overlay layer 56.

The two positioning protrusions 64 are located facing each other at the middle area of the respective longer side of the rectangular shape defining there between a positioning cavity 66. The positioning cavity 66 is located in an area of the longer side of the rectangular shape at which no buttons of the respective electronic device are present. The positioning cavity 66 shows the same length as the length of the related recess 38 of the overlay positioning means 36 at the respective stationary bearing 34 of the device positioning means 28. The positioning cavity 66 at the positioning protrusions 64 and the recess 38 at the stationary bearings 34 thus providing a groove-and-tongue means or slot-and-key means for stationary positioning the overlay 12 relative to the first applicator member 16, and thus for stationary positioning the overlay 12 relative to the electronic device 14 located therein.

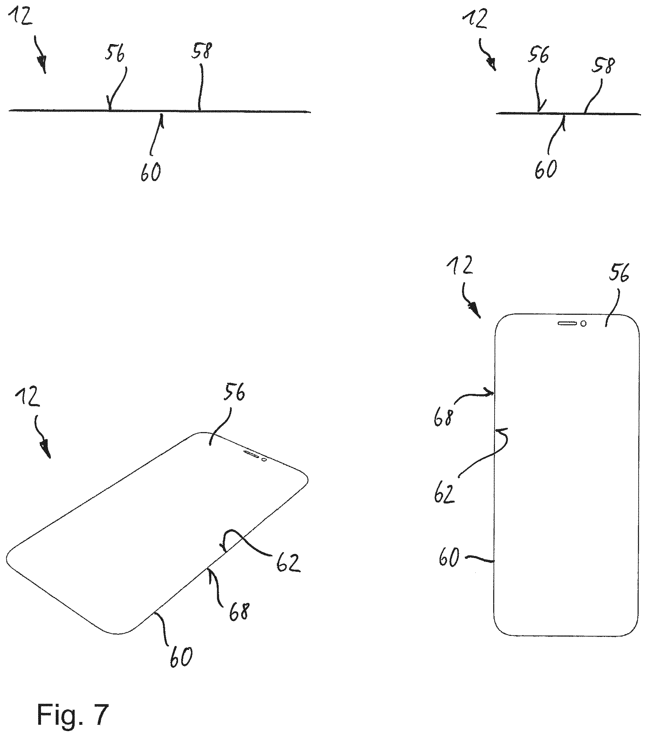

The views of FIG. 7 show an alternative embodiment of an overlay 12 at which even an outer rim or edge 68 of the adhesive release layer 60 is shaped rectangular and does not show any positioning protrusions 64. This embodiment of an overlay 12 is intended for a overlay positioning means 28 which does not include any recesses 38 but is only made by four stationary bearings 34 extending vertically over the upper side of the respective electronic device 14. The outer edge of such adhesive release layer 60 has the same size as the outer rim of the respective electronic device 14.

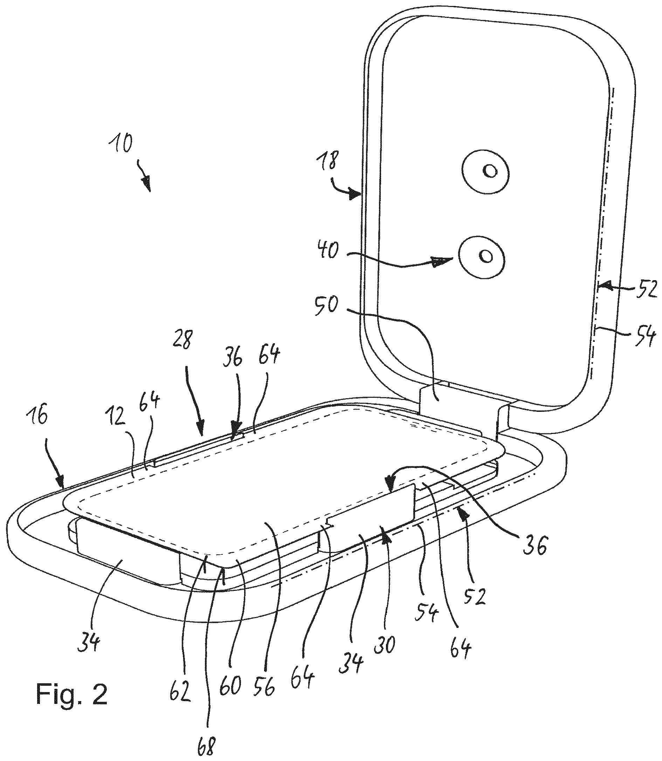

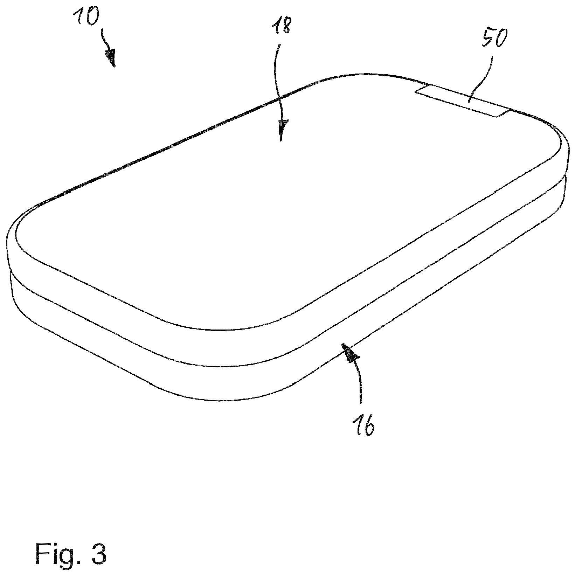

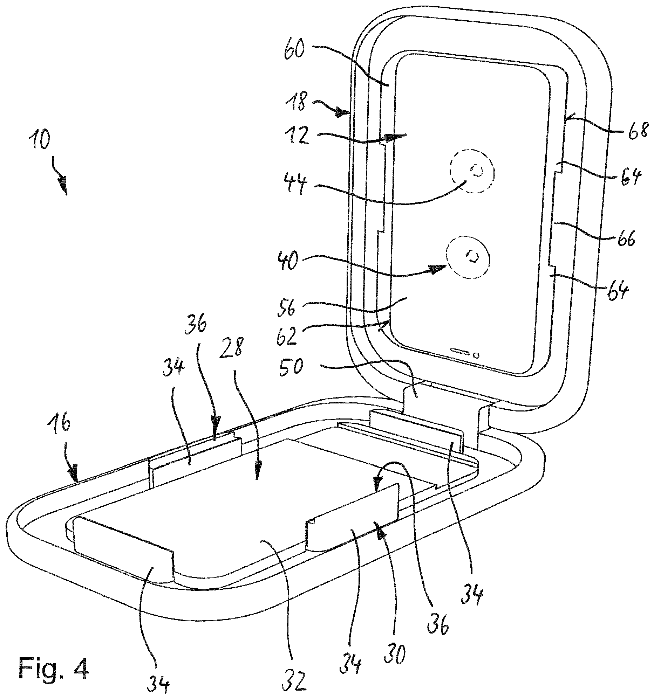

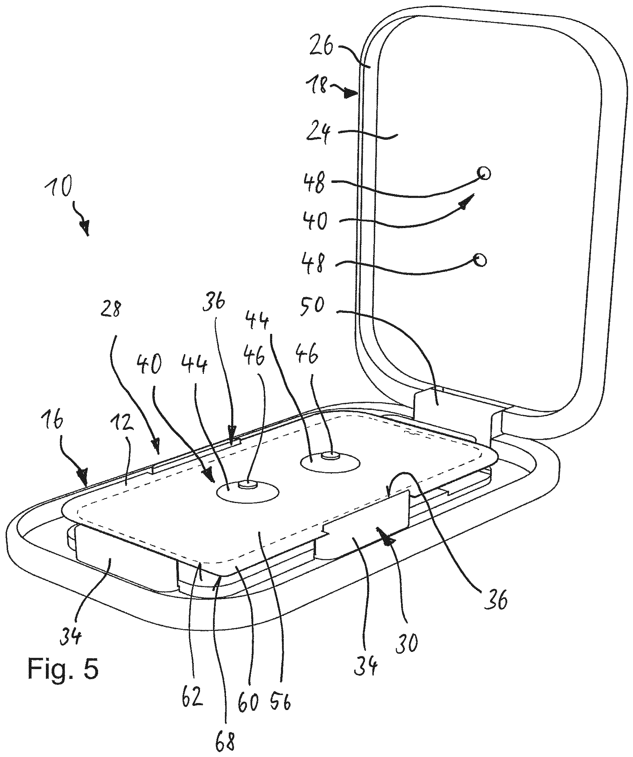

FIG. 1 shows the overlay applicator 10 at a first step or state of a method of applying the overlay 12 onto the electronic device 14, at which just the electronic device 14 is placed in the device positioning means 28 of the first applicator member 16. FIG. 2 shows a second step of the method at which the overlay 12 is placed with the adhesive release layer 60 onto the electronic device 14 and into the overlay positioning means 36 (the electronic device 14 is not depicted in FIG. 2). FIG. 3 illustrated a third step of the method of closing the overlay applicator 10 by pivoting the second applicator member 18 relative to the first applicator member 16 at the hinge 50. Closing the overlay applicator 10 lets the transfer means 40 picking up the overlay 12 from the electronic device 14 by sucking the side of the overlay 12 which is opposite to the adhesive layer 58. This situation is depicted in FIG. 4 after opening of the overlay applicator 10. In this situation the user of the overlay applicator 10 may release the adhesive release layer 60 from the adhesive layer 58 thus exposing the adhesive layer 58. Thereafter, the user might apply the overlay 12 and its adhesive layer 58 with high position accuracy onto the upper side, in particular onto the screen of the electronic device 14 by simply closing the overlay applicator 10 once more. By opening the overlay applicator 10 again, the user will find the situation as depicted in FIG. 5. In this situation, the overlay 12 is adhered onto the electronic device 14. Now finally, the user just has to put back the two suction cups 44 of the suction mechanism 42 which were detached from the openings 48 while opening the overlay applicator 10.

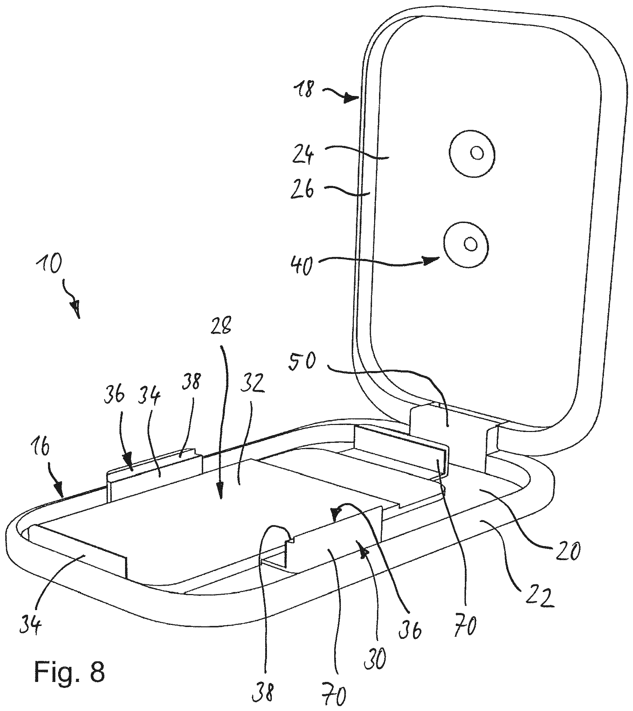

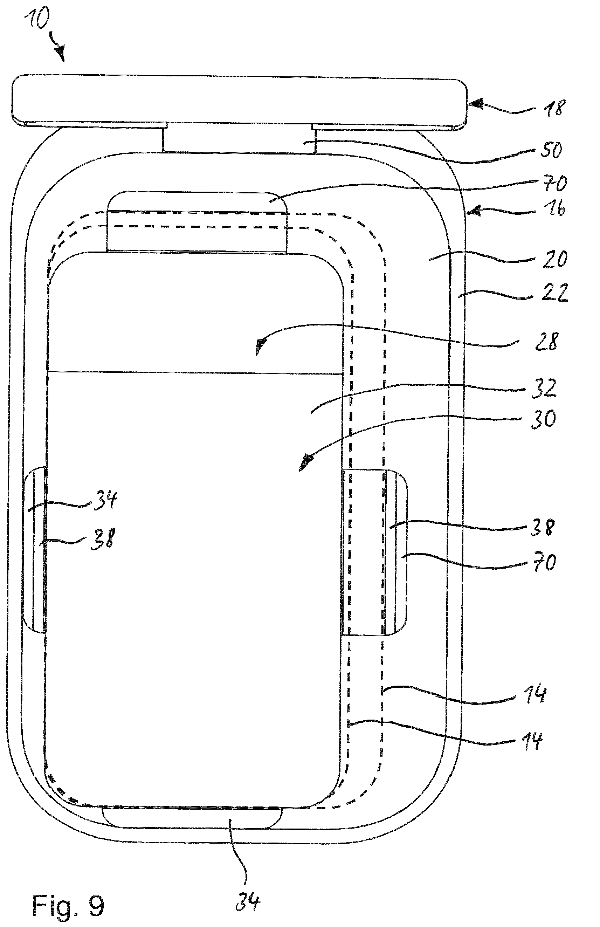

FIG. 8 and 9 show an embodiment of an overlay applicator 10 at which the device positioning means 28 is made by a mechanism base 32, by two stationary bearings 34 and by two clamp sliders 70. The two stationary bearings 34 are located in the middle of a short and a long side of the rectangular mechanism base 32, while the two clamp sliders 70 are located opposite of each of the stationary bearings 34. The clamp sliders 70 have the same form and size as the stationary bearings 34 thus forming the same device positioning means 28 and overlay positioning means 36 as mentioned above. The clamp sliders 70 are spring-loaded displaceable or repositionable towards the center of the mechanism base 32. Thus the clamp mechanism 30 provided by these clamp sliders 70 is able to stationary position different sizes of electronic devices 10 without exchanging the device positioning means 28, which is shown in FIG. 9.

### Reference list

- 10: overlay applicator
- 12: overlay
- 14: electronic device
- 16: first appl icator member
- 18: second applicator member
- 20: base plate
- 22: base wall
- 24: lid plate
- 26: lid wall
- 28: device positioning means
- 30: clamp mechanism
- 32: mechanism base
- 34: stationary bearing
- 36: overlay positioning means
- 38: recess
- 40: transfer means
- 42: suction mechanism
- 44: suction cup
- 46: magnet
- 48: opening
- 50: hinge
- 52: alignment mechanism
- 54: alignment rail
- 56: overlay layer
- 58: adhesive layer
- 60: adhesive release layer
- 62: outer edge of overlay layer
- 64: positioning protrusion
- 66: positioning cavity
- 68: outer edge of adhesive release layer
- 70: clamp slider

## Claims

1. Overlay applicator (10) for applying an overlay (12) onto a screen of an electronic device (14),
- the overlay applicator apparatus including a first and a second applicator member (16, 18),
- the first applicator member including a device positioning means (28) for stationary positioning the electronic device relative to the first applicator member, and
- the first applicator member including an overlay positioning means (36) for stationary positioning the overlay relative to the electronic device,
- the second applicator member including a member positioning means for stationary positioning the second applicator member relative to the first applicator member, and
- the second applicator member including a transfer means (40) for taking over the overlay from the electronic device and for positioning the overlay back onto the electronic device while positioning the second applicator member onto the first applicator member, removing the second applicator member from the first applicator member and positioning the second applicator member back onto the first applicator member.

2. Overlay applicator according to claim 1,
wherein the transfer means include a suction mechanism (42), in particular in the form of at least one suction cup (44).

3. Overlay applicator according to claim 1 or 2,
wherein the transfer means is removably attached onto the second applicator member, in particular by means of a magnet (46).

4. Overlay applicator according to one of claims 1 to 3,
wherein the second applicator member is pivotally attached to the first applicator means, in particular by means of a hinge (50).

5. Overlay applicator according to one of claims 1 to 4,
wherein the member positioning means includes an alignment mechanism (52), in particular in the form of at least one alignment rail (54).

6. Overlay applicator according to one of claims 1 to 5,
wherein the device positioning means includes a clamp mechanism (30), in particular in the form of at least one clamp slider (70).

7. Overlay applicator according to claim 6,
wherein the clamp mechanism includes two clamp sliders and two stationary bearings (34), each of the bearings being located opposite of one of the clamp sliders.

8. Overlay (12) to be applied onto a screen of an electronic device (14) by means of an overlay applicator (10) according to one of claims 1 to 6, the overlay including an overlay layer (56) having a bottom side and an outer edge (62), an adhesive layer (58) being attached to the bottom side of the overlay layer and an adhesive release layer (60) being removably attached onto the adhesive layer, the adhesive release layer including at least one positioning protrusion (64) protruding over the outer edge of the overlay layer, the at least one positioning protrusion being adapted to be positioned relative to a surface of an electronic device by means of an overlay applicator.

9. Overlay according to claim 8,
wherein the adhesive release layer including two positioning protrusions defining there between a positioning cavity (66).

10. Method of applying an overlay (12) onto a surface of an electronic device (14), the method including the steps of:
- stationary positioning the electronic device (14) relative to a first applicator member (16) of an overlay applicator,
- stationary positioning the overlay relative to the electronic device,
- stationary positioning a second applicator member (18) of the overlay applicator relative to the first applicator member,
- taking over the overlay from the electronic device onto the second applicator member,
- removing the second applicator member from the first applicator member,
- removing an adhesive release layer (60) from the overlay, and
- stationary positioning the second applicator member back onto the first applicator member.
